# EUROPÄISCHE PATENTSCHRIFT

(11) **EP 3 269 222 B1**
(45) Veröffentlichungstag und Bekanntmachung des Hinweises auf die Patenterteilung: **11.09.2019**
(21) Anmeldenummer: 17180698.7
(22) Anmeldetag: 11.07.2017
(51) Int. Cl.: A01D 34/30

(54) **ANTRIEBSANORDNUNG ZUM ANTRIEB EINES MÄHWERKSBALKENS EINES SCHNEIDWERKS**
DRIVE ASSEMBLY FOR DRIVING A MOWER BEAM OF A CUTTING SYSTEM
DISPOSITIF D'ENTRAÎNEMENT D'UNE BARRE DE COUPE D'UN OUTIL DE COUPE

(30) Priorität: 12.07.2016 DE 102016212646
(43) Veröffentlichungstag der Anmeldung: 17.01.2018
(73) Patentinhaber: Deere & Company, Moline, IL 61265 (US)
(72) Erfinder: Bueermann, Martin, 68163 Mannheim (DE); Weichholdt, Dirk, 68163 Mannheim (DE); Pellegrini, Eric, 68163 Mannheim (DE); Tamilarasan, Saravanan, 68163 Mannheim (DE); Guthoerl, Steve, 68163 Mannheim (DE); Zumbach, Ferdinand, 68163 Mannheim (DE)
(74) Vertreter: Holst, Sönke

(56) Entgegenhaltungen:
- EP-A2- 2 700 294
- FR-A5- 2 126 807
- US-A- 5 497 605
- US-A1- 2006 089 219
- US-A1- 2011 099 964

## Beschreibung

### Stand der Technik

Schneidwerke werden bei der Ernte landwirtschaftlich angebauter Pflanzen verwendet, um die Pflanzen abzuschneiden, zusammenzuführen und einer Erntemaschine zuzuführen, in der sie weiterverarbeitet werden, insbesondere gedroschen (Mähdrescher) oder gehäckselt (Feldhäcksler). Derartige Schneidwerke umfassen in der Regel einen vorderen Mähwerksbalken, um die Pflanzen abzuscheiden, eine über dem Mähwerksbalken angeordnete Haspel, um die oberen Teile der Pflanzen nach hinten zu raffen, und eine Querförderschnecke, die das Erntegut seitlich zusammenführt, um es durch eine hintere Öffnung in einer Rückwand des Schneidwerks einem Schrägförderer des Mähdreschers oder zur Erstellung von Ganzpflanzensilage einem Einzugskanal des Feldhäckslers zuzuführen. An den seitlichen Enden des Schneidwerks sind Seitenwände vorgesehen, zwischen denen sich der Mähwerksbalken und die Querförderschnecke erstrecken. Der Boden des Schneidwerks zwischen dem Mähwerksbalken und der Rückwand wird durch ein als Schneidtisch bezeichnetes Bodenblech gebildet.

Zur Anpassung an unterschiedliche Erntegutarten und somit Pflanzengrößen werden Schneidwerke mit längenverstellbaren Schneidtischen verwendet. Insbesondere zur Rapsernte wird der Schneidtisch nach vorn ausgezogen (und durch Seitenmesser ergänzt), während er bei der Ernte von niedrigeren bzw. nicht wie Raps ein dichtes Buschwerk bildenden Pflanzen, wie z.B. Weizen, demgegenüber nach hinten eingezogen wird.

Insbesondere bei Schneidwerken mit längenverstellbaren Schneidtischen, aber auch bei nichtlängenverstellbaren Schneidwerken, erweist sich der Antrieb des Mähwerksbalken als relativ aufwändig, da das Antriebsmoment vom Mähdrescher nach ganz vorn zum Mähwerksbalken zu übertragen ist. Im Stand der Technik erfolgt der Antrieb des Mähwerksbalkens üblicherweise durch einen Treibriemen, der an einem seitlichen Ende des Schneidwerks angeordnet ist und das vom Mähdrescher bereitgestellte Antriebsmoment nach vorn auf ein Getriebe überleitet, das mittels eines Exzentertriebs die Drehbewegung in eine lineare Hin-und Herbewegung des Mähwerksbalkens umsetzt (vgl. DE 10 2004 037 580 A1 für ein starres Schneidwerk oder EP 1 653 122 A1 für ein Schneidwerk mit längenverstellbarem Tisch), oder der Treibriemen wird durch eine teleskopierbare Gelenkwelle ersetzt (EP 2 700 294 A2).

Bei Schneidwerksbreiten mit größeren Arbeitsbreiten ist es sinnvoll, den Mähwerksbalken in zwei Teile aufzuteilen, die gegenphasig angetrieben werden, um die durch den sich hin- und her bewegenden Mähwerksbalken bewirkten Schwingungen auszulöschen. Dabei kann der Antrieb der Mähwerksbalkenhälften von jeweils einem Ende des Schneidwerks durch ein zugeordnetes Getriebe, deren Ausgänge gegeneinander um 180° phasenverschoben sind, erfolgen (US 3 577 716 A), oder ausgehend von der Mitte des Schneidwerks durch ein Getriebe mit einer Kurbelwelle, die zwei phasenversetzte Ausgänge antreibt (US 5 497 605 A). Andere, in der Mitte des Schneidwerks angeordnete Antriebe verwenden über Planetengetriebe angetriebene Exzentertriebe zur Umsetzung der Drehbewegung eines Hydromotors in die Seitenbewegung der Mähwerksbalkenhälften (EP 2 382 852 A2) oder ein an der Rückwand des Schneidwerks angeordnetes Getriebe, das die einlaufende Drehbewegung in eine alternierend nach vorn und hinten gerichtete Linearbewegung einer Antriebsstange umsetzt, welche durch einteilige Winkelhebel in eine seitliche Bewegung umgesetzt wird (vgl. die DE 10 2010 040 870 A1).

Die FR 2 126 807 A5 zeigt ein Schneidwerk nach dem Oberbegriff des Anspruchs 1. Der Antrieb eines mit dem Schneidwerksbalken gekoppelten Ausgangselements erfolgt durch zwei Hebel, die jeweils schwenkbar am Ausgangselement und an je einem Exzentertrieb angelenkt sind. Die beiden Exzentertriebe rotieren gegensinnig.

### Problem

Insbesondere (aber nicht nur) bei Schneidwerken mit längenverstellbaren Schneidtischen steht in der Mitte des Schneidwerks nur ein relativ begrenzter, vertikaler Raum zur Verfügung, in dem ein Getriebe zur Umsetzung der einlaufenden Drehbewegung in eine seitliche Bewegung der Mähwerksbalkenhälften eingebaut werden kann. Die Kurbelwelle der US 5 497 605 A benötigt jedoch einen relativ großen vertikalen Bauraum, was auch für die übereinander angeordneten, kombinierten Planeten- und Exzentertriebe der EP 2 382 852 A2 gilt, während die Anordnung nach DE 10 2010 040 870 A1 den Nachteil aufweist, dass sich die Ankoppelpunkte, an denen die Mähwerksbalkenhälften an den Winkelhebeln angebracht sind, nicht nur zur Seite, sondern auch in einem gewissen Maße nach vorn und hinten bewegen, da sie um die Drehachsen der Winkelhebel hin- und herschwenken. Diese Bewegung nach vorn und hinten erfordert ein unerwünschtes, verschleißförderndes Spiel in den Lagerungen zur seitlichen Führung der Mähwerksbalken. Will man die erwähnte, nach vorn und hinten erfolgende Bewegung der Mähwerksbalken begrenzen, muss man die Winkelhebel sehr lang gestalten, was den Antrieb relativ groß und schwer macht. Die Anordnung nach FR 2 126 807 A5 erfordert die gegensinnig rotierenden Exzentertriebe, die seitlich neben dem Mähwerksbalken anzubringen sind, was räumliche Nachteile mit sich bringt.

Die der Erfindung zu Grunde liegende Aufgabe wird darin gesehen, eine Antriebsanordnung zum Antrieb eines Mähwerksbalkens mit einem Getriebe zur Umsetzung der einlaufenden Drehbewegung in eine seitliche Bewegung des Mähwerksbalkens bereitzustellen, das in vertikaler Richtung niedrig baut und insbesondere die bezüglich DE 10 2010 040 870 A1 erwähnten Nachteile nicht oder in vermindertem Maße aufweist.

### Lösung

Diese Aufgabe wird erfindungsgemäß durch die Lehre der Patentansprüche 1 und 7 gelöst, wobei in den weiteren Patentansprüchen Merkmale aufgeführt sind, die die Lösung in vorteilhafter Weise weiterentwickeln.

Eine Antriebsanordnung zum sich hin- und her bewegenden Antrieb eines Mähwerksbalkens, der sich in einer Ebene erstreckt, in welcher er in einer seitlichen Richtung verschiebbar gelagert ist, umfasst ein mit dem Mähwerksbalken gekoppeltes Ausgangselement, das durch eine Antriebseinrichtung in eine seitliche Hin- und Herbewegung versetzbar ist. Das Ausgangselement ist jeweils schwenkbar mit einem ersten Ende eines ersten Hebels und einem ersten Ende eines zweiten Hebels verbunden, die an ihrem zweiten Ende jeweils schwenkbar gelagert sind. Die Hebel und das Ausgangselement sind derart bemessen, dass das Ausgangselement im Wesentlichen nur eine seitliche Bewegung vollführt.

Mit anderen Worten ist ein angetriebenes, mit dem Mähwerksbalken gekoppeltes Ausgangselement, das sich im Betrieb in seitlicher Richtung hin- und her bewegt, durch zwei Hebel derart abgestützt, dass es sich bei einer Bewegung durch die Koppelstange zumindest näherungsweise nur seitlich bewegen kann. Insbesondere können die Hebel mit dem Ausgangselement eine angenäherte Geradführung nach Roberts bilden. Auf diese Weise erreicht man mit einfachen, mechanischen und sehr flach bauenden Mitteln, dass das Ausgangselement eine gewünschte (fast) reine Linearbewegung durchführt.

Ein Eingangselement ist um eine erste Achse schwenkbar gelagert und durch einen Antrieb in eine kontinuierliche Schwenkbewegung um die erste Achse versetzbar und durch eine Koppelstange mit dem Ausgangselement gekoppelt. Die kontinuierliche Schwenkbewegung kann in an sich bekannter Weise durch einen Exzentertrieb erzeugt werden, der eingangsseitig rotativ angetrieben wird.

Die Koppelstange ist im Abstand von der ersten Achse um sich senkrecht zur Ebene des Mähwerksbalkens erstreckende Achsen mit dem Eingangselement und dem Ausgangselement gekoppelt.

Die ersten Enden des ersten Hebels und die ersten Enden des zweiten Hebels können um sich senkrecht zur Ebene des Mähwerksbalkens erstreckende, zweite Achsen am Ausgangselement schwenkbar gelagert sein und um sich parallel zu den zweiten Achsen verlaufende, dritte Achsen schwenkbar gelagert sein.

Die dritten Achsen können vor den zweiten Achsen und seitlich gegenüber den zweiten Achsen nach außen versetzt angeordnet sein.

An der Vorderseite des mit der erfindungsgemäßen Antriebsanordnung ausgestatteten Schneidwerks können an der Vorderseite zwei Mähwerksbalken seitlich versetzt zueinander angeordnet sein, die durch jeweils eine Antriebsanordnung gegensinnig zueinander antreibbar sind. Es wäre jedoch auch denkbar, dass das Schneidwerk, insbesondere bei kleineren Arbeitsbreiten, nur mit einem einzigen Mähwerksbalken und einer einzigen Antriebsanordnung ausgestattet ist. Analog könnte es jedoch auch drei, vier oder mehr Mähwerksbalken aufweisen, die insbesondere phasenversetzt durch je eine Antriebsanordnung angetrieben werden.

Insbesondere kann die Koppelstange einer ersten Antriebsanordnung zum Antrieb eines ersten Mähwerksbalkens vor der ersten Achse mit dem Eingangselement gekoppelt sein und die Koppelstange einer zweiten Antriebsanordnung zum Antrieb eines zweiten Mähwerksbalkens rückwärtig der ersten Achse mit dem Eingangselement gekoppelt sein.

Die vorliegende Antriebsanordnung eignet sich besonders für Schneidwerke mit längenverstellbaren Schneidtischen, bei denen ein vorderer Schneidwerksteil gegenüber einem rückwärtigen Schneidwerksteil verstellbar angeordnet ist. Bei derartigen Schneidwerken werden die Antriebsanordnung und der Mähwerksbalken am vorderen Schneidwerksteil abgestützt.

Das Schneidwerk kann an beliebigen selbstfahrenden Erntemaschinen, wie Mähdreschern oder Feldhäckslern verwendet werden.

### Ausführungsbeispiele

In den Zeichnungen ist ein nachfolgend näher beschriebenes Ausführungsbeispiel der Erfindung dargestellt. Es zeigt:
- Fig. 1: eine Draufsicht auf einem Mähdrescher mit einem daran befestigten Schneidwerk,
- Fig. 2: eine Ansicht der Mähwerkbalken des Schneidwerks der Figur 1 mit ihren Antriebsanordnungen, und
- Fig. 3: eine detaillierte Darstellung der Antriebsanordnungen der Figur 2.

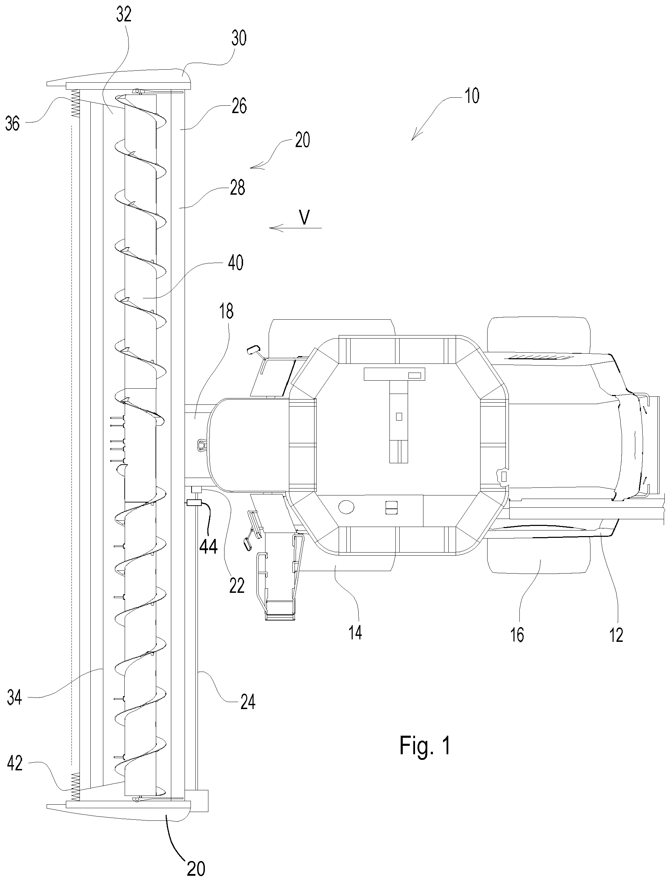

Die Figur 1 zeigt eine selbstfahrende Erntemaschine 10 in Form eines Mähdreschers in einer Draufsicht. Die Erntemaschine 10 umfasst sich einen auf antreibbaren, vorderen Rädern 14 und lenkbaren, hinteren Rädern 16 abstützenden Körper 12, der beim Erntebetrieb in einer Vorwärtsrichtung V über ein Feld bewegt wird, die sich in der Figur 1 nach links erstreckt. An seinem vorderen Ende trägt der Körper 12 einen Schrägförderer 18, an dessen vorderem Ende wiederum ein Schneidwerk 20 abnehmbar angebracht ist. Der Schrägförderer 18 weist eine angetriebene Zapfwelle 22 auf, an welcher eine Eingangswelle 24 zum Antrieb angetriebener Komponenten des Schneidwerks 10 abnehmbar angeschlossen ist. Im Erntebetrieb schneidet das Schneidwerk 20 Erntegut von einem Feld ab, nimmt es auf und führt es dem Schrägförderer 18 zu, der es in das Innere des Körpers 12 fördert, wo es gedroschen, getrennt und gereinigt wird. Schließlich wird das saubere Korn in einem Korntank abgelegt, aus dem es auf ein Transportfahrzeug überladen werden kann.

Das Schneidwerk 20 ist ausziehbar und umfasst einen rückwärtigen Teil 26 mit Seitenwänden 30 und einem sich quer erstreckenden Rahmen 28, der am Schrägförderer 18 angebracht ist, und einen vorderen Teil 32 mit einer Bodenplatte 34 und zwei Mähwerksbalken 36 und 42. Der vordere Teil 32 mit der Bodenplatte 34 und den Mähwerksbalken 36, 42 kann in der Vorwärtsrichtung V durch nicht gezeigte, hydraulische Aktoren gegenüber dem rückwärtigen Teil 26 nach hinten und vorn verschoben werden. Der rückwärtige Teil 26 umfasst weiterhin eine Querförderschnecke 40 und eine nicht gezeigte Haspel. Da Verstellmechanismen des Schneidwerks an sich bekannt sind (vgl. DE 10 2013 208 957 A1, US 7 082 742 B2 und US 7 730 702 B2) wird hier von einer näheren Diskussion abgesehen.

Der Antrieb der Querförderschnecke 40 und ggf. der Haspel erfolgt über die sich an der Rückseite des Schneidwerks 20 quer erstreckende Eingangswelle 24, die sich nach außen bis zur linken Seitenwand 30 erstreckt. Mit der Eingangswelle 24 ist auch ein der Zapfwelle 22 benachbart angeordnetes Getriebe 44 gekoppelt, das von der (sich durch das Gehäuse des Getriebes 44 erstreckenden) Eingangswelle 24 angetrieben wird und zum Antrieb der Mähwerksbalken 36, 42 dient. Das Getriebe 44 ist über eine teleskopierbare Welle 46 mit einem Winkelgetriebe 48 verbunden, das seinerseits eine Querwelle 50 antreibt, die über ein weiteres, nicht gezeigtes Winkelgetriebe ein um eine mittige Achse 54 rotierendes Antriebsrad 52 antreibt. Das Winkelgetriebe 48, das weitere Winkelgetriebe und das Antriebsrad 52 sind unterhalb der Bodenplatte 34 angebracht und daran direkt oder indirekt abgestützt, während das Getriebe 44 am Rahmen 28 des rückwärtigen Teils 26 befestigt ist. Die teleskopierbare Welle 46 ermöglicht die sich beim Ausziehen des Schneidwerks 20 ergebende Relativbewegung zwischen dem Getriebe 44 und dem Winkelgetriebe 48. Bei einer anderen Ausführungsform könnte das Antriebsrad 52 auch vom Getriebe 44 über einen Riemen angetrieben werden, der in einer horizontalen Ebene geführt wird und mit zwei Umlenkrädern auch beim Ausziehen des Schneidwerks in konstanter Spannung gehalten wird, wie an sich bekannt (EP 2 769 610 A1), oder es wird dafür ein Elektro- oder Hydraulikmotor oder Hydraulikzylinder verwendet.

Das um die senkrecht zur Ebene der Bodenplatte 34 (und zur Ebene der Mähwerksbalken 36, 42, in welcher diese sich auch seitlich hin- und her bewegen) orientierte Achse 54 drehbar angeordnete Antriebsrad 52 haltert einen Zapfen 56, der in einen Schlitz in einem gabelförmigen Element 58 eingreift, das seinerseits mit einem Eingangselement 60 von zwei Antriebsanordnungen zum sich hin- und her bewegenden Antrieb der Mähwerksbalken 36, 42 starr verbunden oder einteilig damit hergestellt ist. Anstelle eines Schlitzes könnte das gabelförmige Element 58 auch ein Langloch aufweisen. Es wäre auch denkbar, das Eingangselement 60 am exzentrischen Zapfen 56 um eine parallel zur Achse 54 verlaufende Achse drehbar zu lagern, sodass die Verschiebebewegung zwischen dem gabelförmigen Element 58 und dem Zapfen 56 entfällt, und das Eingangselement 60 zwischen dem Zapfen 56 und dem Anlenkpunkt der zweiten Koppelstange 62 teleskopierbar oder anderweitig ausziehbar zu gestalten. Man könnte auch einen Exzenter um eine parallel zur Achse 54 verlaufende Achse drehbar am Zapfen 56 lagern und ihn über ein Koppelgelenk mit dem Eingangselement 60 verbinden. Auch könnte man einen Exzenter um eine parallel zur Achse 54 verlaufende Achse drehbar am Zapfen 56 lagern und seine Drehbewegung über ein verschiebbar gelagertes Element auf das Eingangselement 60 übertragen. Demnach kann das Eingangselement auf eine beliebige Art in eine kontinuierliche Schwenkbewegung um die Achse 78 versetzt werden.

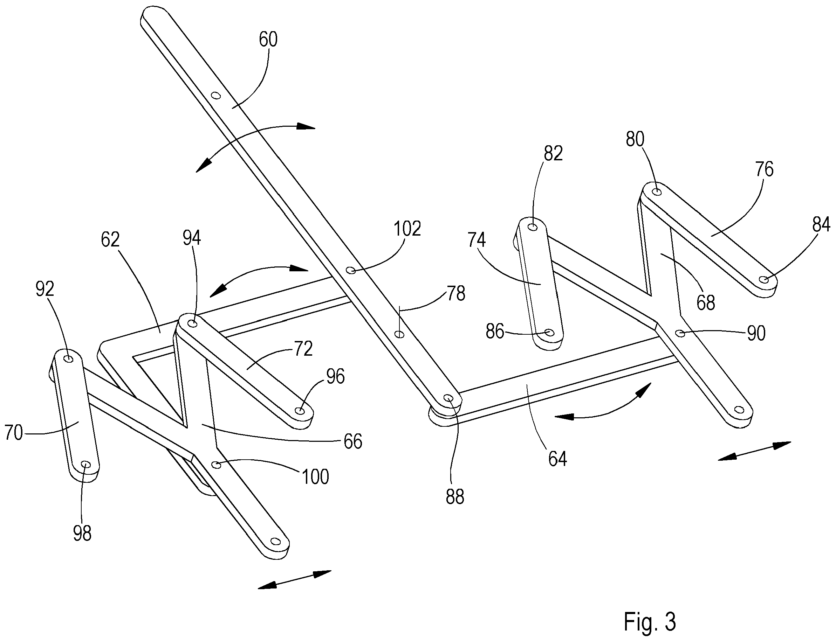

Das Eingangselement 60 ist, wozu nun auf die Figur 3 verwiesen wird, in der Nähe seines vorderen Endes um die erste Achse 78 gegenüber der Bodenplatte 34 schwenkbar angelenkt, welche parallel zur Achse 54 verläuft.

Eine erste, gerade Koppelstange 64 ist um eine parallel zur Achse 54 verlaufende Achse 88 schwenkbar mit dem vorderen Ende des Eingangselements 60 und um eine parallel zur Achse 54 verlaufende Achse 90 schwenkbar (und in Vorwärtsrichtung V etwa mittig) mit einem ersten Ausgangselement 68 gekoppelt, das seinerseits um die Hochachse (oder eine parallel zur Achse 54 verlaufende Achse) schwenkbar oder starr (direkt oder über dazwischen angeordnete Verbindungselemente) mit dem linken Mähwerksbalken 42 gekoppelt ist. Die Koppelstange 64 erstreckt sich quer zur Vorwärtsrichtung V nach links. Ein erster Hebel 74 ist um eine parallel zur Achse 54 verlaufende Achse 82 schwenkbar mit einem rückwärtigen Ende des Y-förmigen Ausgangselements 68 verbunden und anderen Endes um eine parallel zur Achse 54 verlaufende Achse 86 gegenüber der Bodenplatte 34 schwenkbar gelagert. Der erste Hebel 74 erstreckt sich von der Achse 82 nach vorn und rechts. Ein zweiter Hebel 76 ist um eine parallel zur Achse 54 verlaufende Achse 80 schwenkbar mit dem anderen rückwärtigen Ende des Ausgangselements 68 verbunden und anderen Endes um eine parallel zur Achse 54 verlaufende Achse 84 gegenüber der Bodenplatte 34 schwenkbar gelagert. Der zweite Hebel 76 erstreckt sich von der Achse 80 nach vorn und links. Beide Hebel 74, 76 sind gleich lang und um die Längsachse des Ausgangselements 68 zueinander symmetrisch angeordnet.

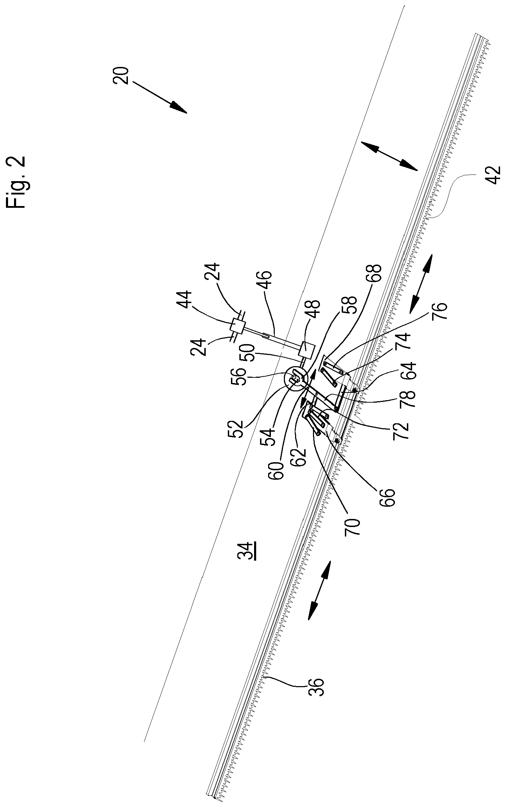

Eine zweite, winkelförmige Koppelstange 62 ist um eine parallel zur Achse 54 (s. Figur 2) verlaufende Achse 102 schwenkbar rückwärtig der Achse 78 mit dem Eingangselement 60 und um eine parallel zur Achse 54 verlaufende Achse 100, die sich in Vorwärtsrichtung V auf gleicher Höhe mit der Achse 90 (und in Vorwärtsrichtung V etwa mittig am Ausgangselement 66) befindet, schwenkbar mit einem zweiten Ausgangselement 66 gekoppelt, das seinerseits um die Hochachse (oder eine parallel zur Achse 54 verlaufende Achse) schwenkbar oder starr (direkt oder indirekt über dazwischen angeordnete Verbindungselemente) mit dem rechten Mähwerksbalken 36 gekoppelt ist. Der Abstand zwischen den Achsen 78 und 102 ist vorzugsweise gleich dem Abstand zwischen den Achsen 78 und 88. Ein dritter Hebel 70 ist um eine parallel zur Achse 54 verlaufende Achse 92 schwenkbar mit einem rückwärtigen Ende des Y-förmigen Ausgangselements 66 verbunden und anderen Endes um eine parallel zur Achse 54 verlaufende Achse 98 gegenüber der Bodenplatte 34 schwenkbar gelagert. Ein vierter Hebel 72 ist um eine parallel zur Achse 54 verlaufende Achse 94 schwenkbar mit dem anderen rückwärtigen Ende des Ausgangselements 66 verbunden und anderen Endes um eine parallel zur Achse 54 verlaufende Achse 96 gegenüber der Bodenplatte 34 schwenkbar gelagert.

Die Achsen 54, 78, 84, 86, 96 und 98 können an der Bodenplatte 34 oder an einem beliebigen anderen Halterungselement befestigt sein, das seinerseits am vorderen Teil 32 befestigt ist. Die Achsen 88, 102, 90, 82, 80, 94, 92 und 100 verbinden nur jeweils zwei bewegliche Bauteile miteinander und sind nicht direkt an der Bodenplatte 34 oder dem erwähnten, die Achsen 54, 78, 84, 86, 96 und 98 halternden Halterungselement befestigt. Die Ausgangselemente 66, 68 können, wie in der Figur 2 dargestellt, dreieckig oder, wie in der Figur 3 gezeigt, Y-förmig sein. Der dritte Hebel 70 erstreckt sich von der Achse 92 nach vorn und rechts. Der vierte Hebel 72 erstreckt sich von der Achse 94 nach vorn und links. Beide Hebel 70, 72 sind gleich lang und um die Längsachse des Ausgangselements 66 zueinander symmetrisch angeordnet. Die Antriebsanordnungen befinden sich unterhalb der Bodenplatte 34 und können nach unten durch eine Abdeckung geschützt werden. Die Messerbalken 36 und 42 sind im Abstand von den Ausgangselementen 66, 68 seitlich verschiebbar am vorderen Teil 42 gelagert, wozu an sich bekannte Linearlagerungen dienen können oder weitere Anordnungen nach Figur 3, die jedoch nicht aktiv angetrieben sind.

Nach alledem dreht sich im Betrieb das Antriebsrad 52 um die Achse 54, angetrieben über die Zapfwelle 22, die Eingangswelle 24, das Getriebe 44, das Winkelgetriebe 48 und das weitere, in der Figur 2 nicht gezeigte Winkelgetriebe. Der Zapfen 56 setzt die Drehbewegung im Zusammenwirken mit dem Schlitz im gabelförmigen Element 58 in eine hin- und hergehende Schwenkbewegung des Eingangselements 60 um die erste Achse 78 um. Die Abmessungen der Ausgangselemente 66, 68 und der Hebel 70 bis 76 und die Positionierungen der Achsen 54, 78, 84, 86, 96, 98, 88, 102, 90, 82, 80, 94, 92 und 100 sind derart gewählt, dass die Bewegung der Ausgangselement 66, 68 über den im Betrieb auftretenden Bewegungsbereich des Eingangselements 60 (näherungsweise) ausschließlich in seitlicher Richtung erfolgt. Die Koppelstangen 62, 64 und die Ausgangselemente 66, 68 und die Hebel 70 bis 76 bilden somit Antriebsanordnungen, welche die hin- und her schwenkende Bewegung des Eingangselements 60 in eine (fast) reine Linearbewegung der Messerbalken 36, 42 umsetzen, ohne großen mechanischen Aufwand und sehr flach bauend. Durch den mittigen Antrieb ergibt sich auch der Vorteil, dass die Seitenwände des Schneidwerks durch den Wegfall des seitlichen Antriebs des Mähwerksbalkens schmaler bauen können und Kontakte des Ernteguts mit an den Schneidwerksenden angeordneten Gehäusen und daraus resultierende Verluste vermieden werden. Über die Hebellänge und Geometrie von Hebel 60 kann das Übersetzungsverhältnis und die Lage für die Antriebseinheit angepasst und optimiert werden. Die Antriebsanordnungen sind hier als so genannte Roberts-Geradführung ausgeführt.

## Patentansprüche

1. Schneidwerk (20) mit einem in einer Vorwärtsrichtung über ein Feld bewegbaren Rahmen (26), an dessen Vorderseite ein Mähwerksbalken (36, 42) in einer Ebene in seitlicher Richtung verschiebbar gelagert und mit einer Antriebsanordnung zum sich hin- und her bewegenden Antrieb gekoppelt ist, wobei die Antriebsanordnung ein mit dem Mähwerksbalken (36, 42) gekoppeltes Ausgangselement (66, 68) umfasst, das durch eine Antriebseinrichtung in eine seitliche Hin- und Herbewegung versetzbar ist und jeweils schwenkbar mit einem ersten Ende eines ersten Hebels (74, 70) und einem ersten Ende eines zweiten Hebels (76, 72) verbunden ist, die an ihrem zweiten Ende jeweils schwenkbar gelagert sind, wobei die Hebel (70-76) und das Ausgangselement (66, 68) derart bemessen sind, dass das Ausgangselement (66, 68) im Wesentlichen nur eine seitliche Bewegung vollführt, **dadurch gekennzeichnet, dass** ein Eingangselement (60) um eine erste Achse (78) schwenkbar gelagert und in eine kontinuierliche Schwenkbewegung um die erste Achse (78) versetzbar und durch eine Koppelstange (62, 64) mit dem Ausgangselement (66, 68) gekoppelt ist und dass die Koppelstange (62, 64) im Abstand von der ersten Achse (78) um sich senkrecht zur Ebene des Mähwerksbalkens (36, 42) erstreckende Achsen (88, 90, 100, 102) mit dem Eingangselement (60) und dem Ausgangselement (66, 68) gekoppelt ist.

2. Schneidwerk (20) nach Anspruch 1, wobei die ersten Enden des ersten Hebels (74, 70) und die ersten Enden des zweiten Hebels (76, 72) um sich senkrecht zur Ebene des Mähwerksbalkens (36, 42) erstreckende, zweite Achsen (80, 82, 92, 94) am Ausgangselement (66, 68) schwenkbar gelagert sind und um sich parallel zu den zweiten Achsen verlaufende, dritte Achsen (84, 86, 96, 98) schwenkbar gelagert sind.

3. Schneidwerk (20) nach Anspruch 2, wobei die dritten Achsen (84, 86, 96, 98) vor den zweiten Achsen (80, 82, 92, 94) und seitlich gegenüber den zweiten Achsen (80, 82, 92, 94) nach außen versetzt angeordnet sind.

4. Schneidwerk (20) nach einem der Ansprüche 1 bis 3, wobei an der Vorderseite zwei Mähwerksbalken (36, 42) seitlich versetzt zueinander angeordnet sind, die durch jeweils eine Antriebsanordnung gegensinnig zueinander antreibbar sind.

5. Schneidwerk (20) nach Anspruch 4, wobei die Koppelstange (64) einer ersten Antriebsanordnung zum Antrieb eines ersten Mähwerksbalkens (42) vor der ersten Achse (78) mit dem Eingangselement (60) gekoppelt ist und die Koppelstange (62) einer zweiten Antriebsanordnung zum Antrieb eines zweiten Mähwerksbalkens (36) rückwärtig der ersten Achse (78) mit dem Eingangselement (60) gekoppelt ist.

6. Schneidwerk (20) nach einem der Ansprüche 1 bis 5, wobei ein vorderer Schneidwerksteil gegenüber einen rückwärtigen Schneidwerksteil (32) verstellbar angeordnet ist und die Antriebsanordnung und der Mähwerksbalken (36, 42) am vorderen Schneidwerksteil abgestützt sind.

7. Mähdrescher (10) mit einem Schneidwerk (20) nach einem der Ansprüche 1 bis 6.

## Claims

1. Cutting mechanism (20), with a frame (26) which is movable over a field in a forward direction and on the front side of which a cutter bar (36, 42) is mounted displaceably in a plane in the lateral direction and is coupled to a drive arrangement for the reciprocating drive , wherein the drive arrangement comprises an output element (66, 68) which is coupled to the cutter bar (36, 42) and can be set into a lateral reciprocating movement by a drive device and is in each case pivotably connected to a first end of a first lever (74, 70) and to a first end of a second lever (76, 72), which levers are in each case pivotably mounted at their second end, wherein the levers (70-76) and the output element (66, 68) are dimensioned in such a manner that the output element (66, 68) essentially only carries out a lateral movement, **characterized in that** an input element (60) is mounted pivotably about a first axis (78) and can be set into a continuous pivoting movement about the first axis (78) and is coupled to the output element (66, 68) by a coupling rod (62, 64) and **in that** the coupling rod (62, 64) is coupled to the input element (60) and to the output element (66, 68) at a distance from the first axis (78) about axes (88, 90, 100, 102) extending perpendicular to the plane of the cutter bar (36, 42).

2. Cutting mechanism (20) according to Claim 1, wherein the first ends of the first lever (74, 70) and the first ends of the second lever (76, 72) are mounted pivotably on the output element (66, 68) about second axes (80, 82, 92, 94) extending perpendicular to the plane of the cutter bar (36, 42) and are mounted pivotably about third axes (84, 86, 96, 98) running parallel to the second axes.

3. Cutting mechanism (20) according to Claim 2, wherein the third axes (84, 86, 96, 98) are arranged offset outward in front of the second axes (80, 82, 92, 94) and laterally in relation to the second axes (80, 82, 92, 94).

4. Cutting mechanism (20) according to one of claims 1 to 3, wherein two cutter bars (36, 42) which are driveable in opposite directions to each other by a respective drive arrangement are arranged offset laterally with respect to each other on the front side.

5. Cutting mechanism (20) according to Claim 4, wherein the coupling rod (64) of a first drive arrangement for driving a first cutter bar (42) is coupled to the input element (60) in front of the first axis (78), and the coupling rod (62) of a second drive arrangement for driving a second cutter bar (36) is coupled to the input element (60) rearward of the first axis (78).

6. Cutting mechanism (20) according to one of Claims 1 to 5, wherein a front cutting mechanism part is arranged adjustably in relation to a rearward cutting mechanism part (32), and the drive arrangement and the cutter bar (36, 42) are supported on the front cutting mechanism part.

7. Combine harvester (10) with a cutting mechanism (20) according to one of Claims 1 to 6.

## Revendications

1. Outil de coupe (20) comprenant un châssis (26) déplaçable dans une direction d'avance sur un champ, au niveau du côté avant duquel une barre de coupe (36, 42) est supportée de manière déplaçable dans un plan dans la direction latérale et est accouplée à un agencement d'entraînement pour un entraînement d'avant en arrière, l'agencement d'entraînement comprenant un élément de sortie (66, 68) accouplé à la barre de coupe (36, 42), lequel peut être animé d'un mouvement de va-et-vient latéral par un dispositif d'entraînement et est à chaque fois connecté de manière pivotante à une première extrémité d'un premier levier (74, 70) et à une première extrémité d'un deuxième levier (76, 72), qui sont à chaque fois supportés de manière pivotante au niveau de leur deuxième extrémité, les leviers (70-76) et l'élément de sortie (66, 68) étant dimensionnés de telle sorte que l'élément de sortie (66, 68) effectue essentiellement seulement un mouvement latéral, **caractérisé en ce qu'**un élément d'entrée (60) est supporté de manière pivotante autour d'un premier axe (78) et peut être animé d'un mouvement de pivotement continu autour du premier axe (78) et est accouplé par une barre de liaison (62, 64) à l'élément de sortie (66, 6 8), et **en ce que** la barre de liaison (62, 64) est accouplée à l'élément d'entrée (60) et à l'élément de sortie (66, 68) à distance du premier axe (78) autour d'axes (88, 90, 100, 102) s'étendant perpendiculairement au plan de la barre de coupe (36, 42).

2. Outil de coupe (20) selon la revendication 1, dans lequel les premières extrémités du premier levier (74, 70) et les premières extrémités du deuxième levier (76, 72) sont supportées de manière pivotante sur l'élément de sortie (66, 68) autour de deuxièmes axes (80, 82, 92, 94) s'étendant perpendiculairement au plan de la barre de coupe (36, 42) et sont supportées de manière pivotante autour de troisièmes axes (84, 86, 96, 98) s'étendant parallèlement aux deuxièmes axes.

3. Outil de coupe (20) selon la revendication 2, dans lequel les troisièmes axes (84, 86, 96, 98) sont disposés de manière décalée vers l'extérieur devant les deuxièmes axes (80, 82, 92, 94) et latéralement par rapport aux deuxièmes axes (80, 82, 92, 94).

4. Outil de coupe (20) selon l'une quelconque des revendications 1 à 3, dans lequel deux barres de coupe (36, 42) sont disposées de manière décalée latéralement l'une par rapport à l'autre au niveau du côté avant, lesquelles peuvent être entraînées en sens inverse l'une par rapport à l'autre par un agencement d'entraînement respectif.

5. Outil de coupe (20) selon la revendication 4, dans lequel la barre de liaison (64) d'un premier agencement d'entraînement pour l'entraînement d'une première barre de coupe (42) est accouplée en avant du premier axe (78) à l'élément d'entrée (60) et la barre de liaison (62) d'un deuxième agencement d'entraînement pour l'entraînement d'une deuxième barre de coupe (36) est accouplée en arrière du premier axe (78) à l'élément d'entrée (60).

6. Outil de coupe (20) selon l'une quelconque des revendications 1 à 5, dans lequel une partie d'outil de coupe avant est disposée de manière réglable par rapport à une partie de coupe arrière (32) et l'agencement d'entraînement et la barre de coupe (36, 42) sont supportés au niveau de la partie d'outil de coupe avant.

7. Moissonneuse-batteuse (10) comprenant un outil de coupe (20) selon l'une quelconque des revendications 1 à 6.
